# EUROPEAN PATENT APPLICATION

(11) **EP 4 372 377 A1**
(43) Date of publication of application: **22.05.2024**
(21) Application number: 22383102.5
(22) Date of filing: 15.11.2022
(51) Int. Cl.: G01N 31/22, G01N 21/78

(54) **A SIMPLE AND LOW-COST TEST KIT FOR DETECTING AND MEASURING AMMONIA IN AIR**

(71) Applicant: Palacin Urquijo, Fernando Javier, 28042 Madrid (ES)
(72) Inventor: Palacin Urquijo, Fernando Javier, 28042 Madrid (ES)
(74) Representative: ABG Intellectual Property Law, S.L.

(57) **Abstract**

The present invention generally relates to the control of ammonia in air. More specifically, it relates to an indicator paper strip impregnated with bromocresol purple and a test kit comprising the same for detecting and measuring ammonia in air. The present invention finds practical application in any scenario where large amounts of ammonia are generated or are otherwise present such as in facilities for housing animals as well as in a number of other fields including different industries (fertilisers, textile, paper, plastic, explosives, etc.), climatization and air conditioning systems or the health care sector. The present invention also relates to methods and uses of the disclosed indicator paper strip and the test kit for detecting and measuring ammonia in air.

## Description

### FIELD OF THE INVENTION

The present invention generally relates to the control of ammonia in air. More specifically, it relates to a paper-based indicator and a test kit comprising the same for detecting and measuring the level of ammonia gas in the air. The present invention finds practical application in any scenario where large amounts of ammonia are generated or are otherwise present such as in facilities for housing animals as well as in a number of other fields including different industries (fertilisers, textile, paper, plastic, explosives, etc.), climatization and air conditioning systems or the health care sector.

### BACKGROUND OF THE INVENTION

Ammonia (NH₃) is a colorless, highly irritant and corrosive gas with harmful effects on humans, animals, ecosystems and climate. Therefore, an appropriate control of this gas in the environment is required in many different situations where ammonia is present.

Ammonia is typically present at higher concentrations in indoor air (-10-70 ppb) than in outdoor air (~50 ppt to 5 ppb). In the ambient air, the amount of ammonia varies depending on the spatial proximity to industry and agriculture but, on average, it is below the recommended concentration of 1 ppm. Recommended or mandatory occupational exposure limits (OELs) have been developed in many countries for airborne exposure to gases, vapours and particulates. Different regulations establish a maximum average concentration of ammonia in air for a normal 8-hour working day and 40-hour week [commonly known as time-weighted average (TWA) exposure limit] of 25-30 ppm.

Measuring ammonia from the environmental air is key for instance at animal facilities including both farms of livestock, poultry and other animals as well as laboratories which use animals for testing purposes. Ammonia is produced by the decomposition of urea, present in urine, in the presence of the enzyme urease, which is present in feces. High concentrations of NH₃ inside animal houses represent potential health hazards to both the human workers and the animals. In humans, inhalation of low concentrations of ammonia can cause coughing, and nose and throat irritation while exposure to higher concentrations in air causes immediate burning of the nose, throat and respiratory tract. This can cause bronchiolar and alveolar edema, and airway destruction resulting in respiratory distress or failure. In animals, exposure to high concentrations of ammonia can also adversely affect their health, lead to lower body weight and, in the case of laboratory animals, invalidate test results.

Specifically, lab animal facilities are exposed to levels of ammonia from the animals present in the cages. While ammonia levels within individually ventilated cages are generally within any human regulations, they are greater than the room level. As temperature and humidity increase, so do the ammonia levels present in the cages. The increase in humidity leads to bacterial generation of ammonia. Inadequate cleaning of animal cages leads to an environment contaminated with ammonia and other substances.

While provided below is a short introduction to laboratory animal science that helps to understand the scope of the present invention in this sector, it will be readily appreciated and understood that the utilization of the invention in other sectors is also contemplated.

There has been a progressive evolution in laboratory animal science since the middle of the last century. The 1960's was the period of refinement of maintenance and production systems to ensure animals of high quality. In the 1970s most efforts were directed towards obtaining more accurate and consistent methods by seeking standardised biochemical reactivity; to this end, a strong emphasis was placed in decontaminating the laboratory animals to so as to obtain animals that are free of pathogens [Germ-free (GF) and specific pathogen-free (SPF) animals] in order to avoid interference with research. The 1980s was the decade of the 3Rs principle whose goal is to avoid animal experiments altogether (Replacement), to limit the number of animals (Reduction) and their suffering (Refinement) in tests to an absolute minimum. Finally, in the 1990s, apart from the development of new transgenic models, efforts were directed to a large extent towards methods of environmental enrichment and welfare improvement. At the beginning of the new millennium, the trend is similar.

The use of animals in scientific research has been a controversial issue for well over a hundred years. The basic problem can be stated quite simply: Research with animals has saved human lives, lessened human suffering, and advanced scientific understanding, yet that same research can cause pain and distress for the animals involved and usually results in their death. Therefore, the main justification that supports the significant use of animals as biological reagents, in the context of scientific research, is that the benefits obtained from such research outweigh any possible animal suffering or sacrifice involved. The use of animals in biomedical and behavioral research has greatly increased scientific knowledge and has had enormous benefits for human health: increase in average life expectancy (of about 25 years in USA between 1900-1990); progress of cardiology (e.g. heart-lung machines); development of transplantation techniques and immunology; creation of human vaccines (e.g. polio); development of many clinically useful methodologies (e.g. computed axial tomographic (CAT) scans and magnetic resonance imaging (MRI)); better understanding of the brain functions; amelioration of diseases such as cancer, diabetes, uncontrolled infectious diseases, AIDS; benefits not only for humans but also for animals (vaccines, antibiotics, anesthetics, and other products have improved the life of countless animals). See "Use of Laboratory Animals in Biomedical and Behavioral Research" (NAP, 1988).

In 1983, an estimated 17 to 22 million animals were used for research, testing, and education in the United States. In this case, "animal" includes all vertebrates-namely, mammals, birds, reptiles, amphibians, and fish. The majority of animals used-between 12 million and 15 million-were rats and mice. These quantities are a small fraction of the total of over 5 billion animals used annually for food, clothing, and other purposes in the United States.

The search for alternatives to the use of animals in research and testing remains a valid goal of researchers, but the chance that alternatives will completely replace animals in the foreseeable future is nil. Nevertheless, successes have occurred in reducing the numbers of animals used, in developing non-mammalian models, and in refining experimental protocols to reduce the pain experienced by animals, and work continues in this area.

Beyond any ethical and moral considerations and the existing controversy, animal welfare science is objective in itself and is aimed to establish working and experimental models, independently of the observer, avoiding analogies with ourselves other than the fact that humans and animals share to some extent a similar nervous system and mechanisms of survival and adaptation. In short, animal welfare science refers to the state and not to the care in itself or the responsibility of the humans with other species.

Detecting and measuring the ammonia concentrations within the cages of lab animals helps to determine when to replace the bedding material or the cage to ensure that ammonia is not too high so as to avoid an environment for the animal that may be detrimental to its health and welfare.

There are mainly two systems for the identification and quantitative determination of NH₃ in the environment and in industrial gases:
a) Electronic devices, which use electrochemical sensors to measure ammonia. Ammonia in the air reacts to the chemicals in the sensor, generating an electrical current proportional to the amount of ammonia in the air. These electronic devices give direct readings that provide an immediate visual display of NH₃ concentration (ppm) right after the measurement is completed. They may be designed to emit an audible or luminous alarm of the presence of NH₃ at predetermined concentrations.
b) Gas Detection Tubes, which are based on a colorimetric technique. They are glass tubes or ampoules filled with a specific reagent for the gas to be measured. The glass ampoules have pointed ends, which must be cut off and one end of the ampoule is inserted into a suction pump and the other end is introduced into the environment to be evaluated. To carry out the evaluation, the pump must be controlled to achieve a sufficient volume of sample to react with the reagent in the ampoule (each model of ampoule requires different volumes of air to be evaluated, so it is necessary to follow the instructions of the manufacturer to know how many insufflations to take in each case). The ammonia in the air reacts to chemicals in the tube, changing the color of the chemicals the length of the tube. The higher the level of ammonia, the longer the color change down the length of the tube. A graduated scale on the outside allows an easy determination of ammonia concentration in ppm.

However, extremely high accuracy techniques are not always required but detection techniques which provide qualitative or approximate quantitative data are preferred. At present, the simplest and least expensive way to obtain discrete ammonia measurements is the pH test paper. This method is based on the fact that NH₃ is readily dissolvable in water and converted into the ammonium cation (NH₄⁺) thus changes the pH of the water. However, one important drawback of the pH-paper based test kits is that they require moistening the paper strip with water and wait a moment for the measurement of ammonia. This represents a serious obstacle if one wants to know the ammonia levels in a huge number of different locations e.g. within each individual animal cage since it is common that animal research facilities have space for 2500 cages or even more.

Thus, there is still a need for a simple and cost-effective system able to detect and measure ammonia concentrations in a straightforward and reliable manner.

### BRIEF DESCRIPTION OF THE INVENTION

The present invention solves the aforementioned needs by the provision of an indicator paper strip for detecting and measuring ammonia in air according to claim 1, a test kit for detecting and measuring ammonia according to claim 5, a method for detecting and measuring ammonia in air according to claim 9 and a use of the indicator paper strip or the kit for detecting and measuring ammonia according to claim 10. The dependent claims define preferred embodiments of the invention.

The present inventor has conducted extensive experimentation with an intention to provide a practical solution that overcomes the limitations associated with the use of traditional ammonia detectors in animal laboratories which have hundreds or thousands of cages for housing animals. In these circumstances, the utilization of an electronic device in each individual cage involves significant costs while the handling of so many ammonia detection tubes is both impractical and expensive. Test papers based on pH, although economical, require placing one or more drops of water on the paper strip, exposing it to the air and waiting for at least 15 seconds for the reading (color change) which represents a duration of between 30 sec to 1 min for each cage. More significantly, current ammonia test papers are not reusable but they have to be thrown away after a single use.

Typically, bedding and cage changes at animal facilitites are scheduled beforehand at present, e.g. once weekly, which means that certain cages are too dirty (excessive urine and feces) and certain cages are still reasonably clean at the moment of the change.

In a first inventive aspect, the present invention provides an indicator paper strip impregnated with bromocresol purple for detecting and measuring ammonia in air without being moistened nor wet with water before use.

The paper strip impregnated with bromocresol purple changes color when ammonia is detected and allows an easy determination of ammonia concentration in view of the resulting color by comparison with a calibrated color chart. Advantageously, in contrast to current ammonia test papers, the paper strip of the present invention must not be contacted with water for a correct reading of the ammonia levels.

After extensive research with different indicator substances (such as methyl red, bromothymol blue, phenol red, bromocresol green/methyl red mixed indicator 4.8, methylene blue/methyl red mixed indicator 4.4, litmus ...) and indicator papers (universal indicator paper pH 1-10, litmus paper ...), the inventor surprisingly found that only bromocresol purple was able to produce a visible color change suitable for adequately measuring ammonia concentration in air.

In a second inventive aspect, the present invention provides a test kit for detecting and measuring ammonia in air, said kit comprising:
- the indicator paper strip according to the first inventive aspect of the invention; and
- a calibrated color chart, where each color is indicative of a particular ammonia concentration.

In a particular preferred embodiment, the calibrated color chart is included (e.g. printed) in a first section of an adhesive plastic sheet and the indicator paper strip is attached to a second section of said adhesive plastic sheet. Additionally, said first section of the adhesive plastic sheet that includes the calibrated color chart may be intended for attaching the kit to a point where ammonia is to be measured, e.g. to the interior surface of an animal cage in order to allow an easy observation and monitoring from outside.

The indicator paper strip and the test kit proposed by the present invention is specially suitable for detecting the presence of ammonia as a substance generated by the animals' waste in animal facilities. Therefore, the indicator paper strip or the kit of the present invention can be placed inside each cage occupied by animals in order to determine its dirty/clean state, making it possible to technically evaluate whether the animals can remain in the same cage for longer or whether it is necessary to change or clean the space, depending on the color acquired by the paper. Once the cage is cleaned or changed, the level of ammonia in air within the cage returns to its normal range and the paper strip also returns to its initial yellow color, being ready for a new use.

In a third inventive aspect, the present invention provides a method for detecting and measuring ammonia in air, said method comprising:
a) providing the indicator paper strip according to the first inventive aspect of the invention and a calibrated color chart, or providing the test kit according to the second inventive aspect of the invention;
b) putting the indicator paper strip or the kit in the place where ammonia is to be detected and measured; and
c) comparing the resulting color of the paper strip to the calibrated color chart to determine ammonia concentration.

As previously noted, advantageously, the indicator paper strip of the invention is not moisten or wet with drops of water for determining ammonia concentration and is reusable for different measurements.

A further benefit of the present invention is that, once the indicator paper strip or the test kit has been put in the place where ammonia is to be detected and measured according to step b), the comparison of the resulting color of the paper strip to the calibrated color chart to determine ammonia concentration according to step c) can be carried out without any manipulation of the paper strip, just observing the paper strip. For instance, in certain embodiments, the indicator paper strip or the kit is put inside an animal cage, e.g. attached to the interior surface of an animal cage, and the paper strip impregnated with bromocresol purple gradually changes color as the time advances and the ammonia concentration increases due to the accumulation of urine and feces. The ammonia concentration can be then easily determined at any moment in view of the resulting color by comparison with a calibrated color chart, without manipulating the paper strip nor the cage nor the animals but simply by visual observation of the paper strip from outside the cage.

In certain embodiments, for instance when initially the concentration of ammonia is within its normal range in air such as in a just cleaned cage, the method may comprise a step of waiting for a period of time between step b) and c). Such period of time may be predetermined, e.g. 1 day or 2 days, or not. Generally, in the case of just cleaned animal cage, ammonia can be detected from day 5 or 6 and then the concentration gradually increases. Thus, in the case of animal cages, the method may comprise a step of waiting for about 5 or 6 days between step b) and c).

In certain embodiments, after step c), the method may comprise a step of taking a decision. In the case of animal cages, such a decision may be for instance replacing the bedding or the cage if the concentration of ammonia is not acceptable or waiting for a (further) period of time if the concentration of ammonia is still acceptable.

In a fourth inventive aspect, the present invention provides a use of the indicator paper strip according to the first inventive aspect of the invention or the test kit according to the second inventive aspect of the invention for detecting and measuring ammonia in air, wherein said use does not comprise moistening or wetting the indicator paper strip with water.

All the features described in this specification (including the claims, description and drawings) can be combined in any combination thereof, with the exception of combinations of such mutually exclusive features.

### BRIEF DESCRIPTION OF THE FIGURES

These and other characteristics and advantages of the invention will become clearly understood in view of the detailed description of the invention which becomes apparent from preferred embodiments of the invention, given just as an example and not being limited thereto, with reference to the drawings.

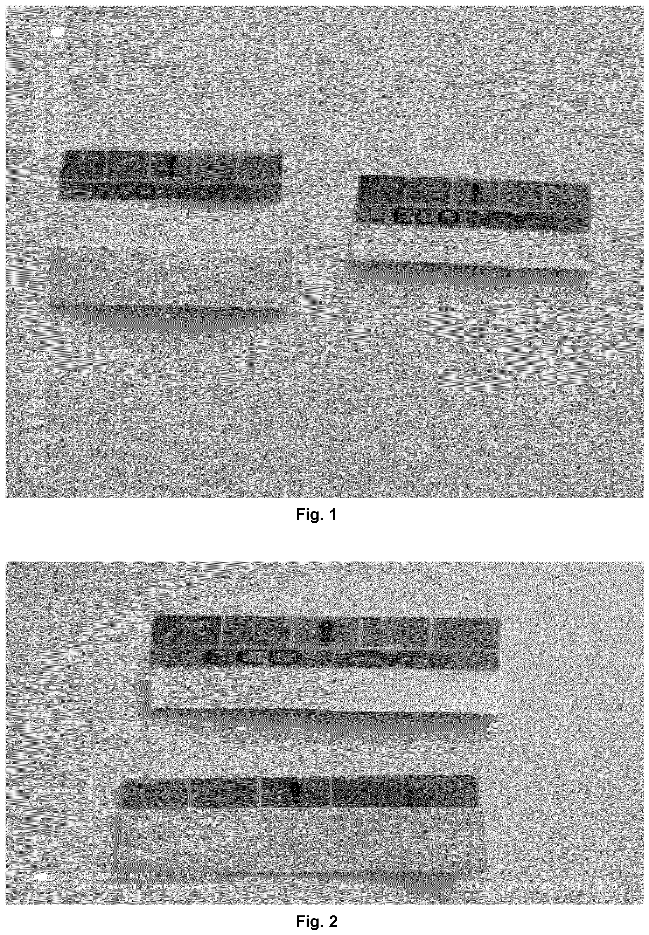

- Figure 1: This photograph shows a calibrated color chart (top-left), an indicator paper strip impregnated with bromocresol purple (bottom-left) and a test kit comprising both parts, i.e. color chart and paper strip, assembled together (right) according to one embodiment of the present invention.
- Figure 2: This photograph shows a back (top) and a front view (bottom) of the kit of figure 1.
- Figure 3: This photograph shows a roll of kits of figure 1, packed in a dispenser.
- Figure 4: This photograph shows a quantitative test kit according to one embodiment of the present invention. In this case, the color change of the paper strip represents a fairly approximate measure of the parts per million of the substance to be measured (i.e. NH₃). Specifically, the color chart is calibrated in 6 different regions in this particular example: 0 ppm, ≤10 ppm, ≥20 ppm, ≥50 ppm, ≥100 ppm and ≥200 ppm.
- Figure 5: This photograph shows a qualitative test kit according to one embodiment of the present invention. In this case, the change of color of the paper strip represents a measure of air quality. Specifically, the color chart is calibrated in 5 different regions associated with informative pictograms in this particular example: e.g. good or normal; acceptable; attention or alert: danger; unacceptable, intolerable.

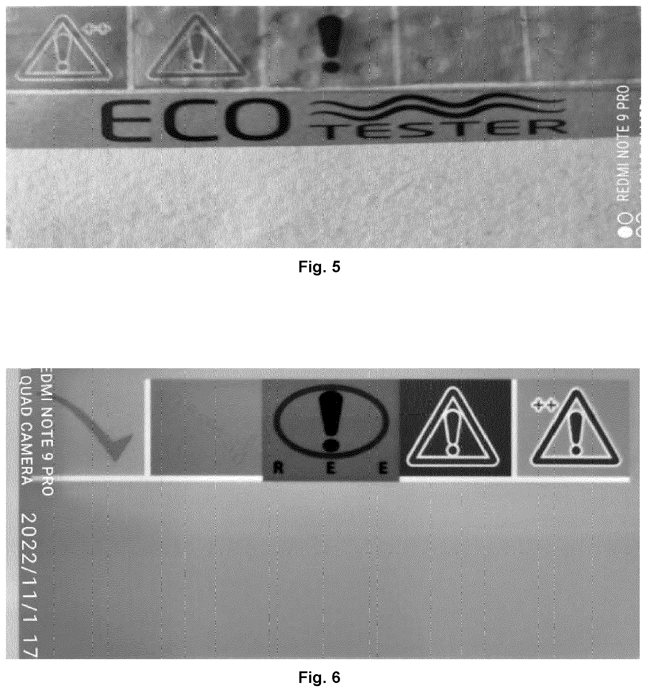

- Figure 6: This photograph shows a qualitative test kit according to one embodiment of the present invention. In this case, the change of color of the paper strip represents a measure of air quality. Specifically, the color chart is calibrated in 5 different regions associated with informative pictograms in this particular example: e.g. good or normal; acceptable; attention or alert: danger; unacceptable, intolerable. This test kit is particularly useful for animals housed in cages since the attention/alert region corresponds to the range called Ecotester ethical range (REE, by its Spanish acronym), indicating that the cage or the bedding material of the cage should be changed as soon as possible in order to avoid exposing the animals to dangerous concentrations of ammonia.

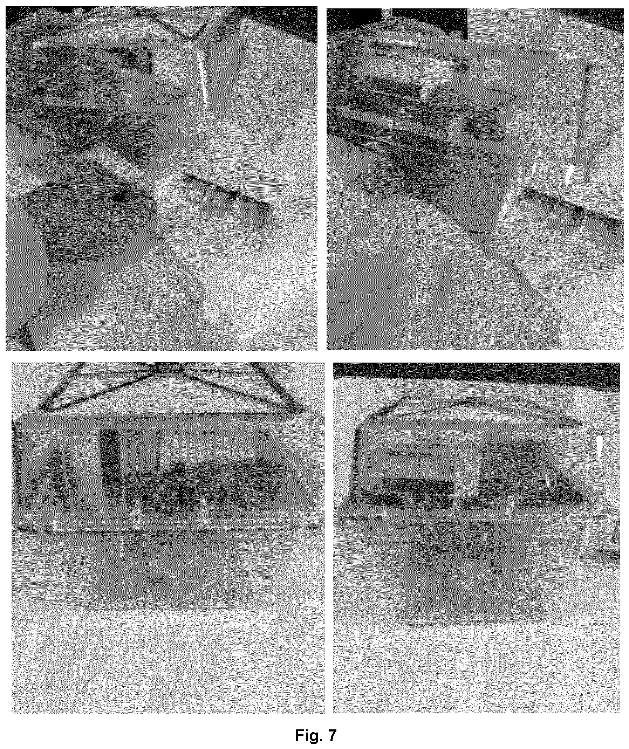

- Figure 7: These photographs show the arrangement of a kit according to one embodiment of the present invention within a cage for mice. The kit can be stuck to the interior surface of the cage, at a place where the animal cannot reach, in order to allow an easy observation from outside.

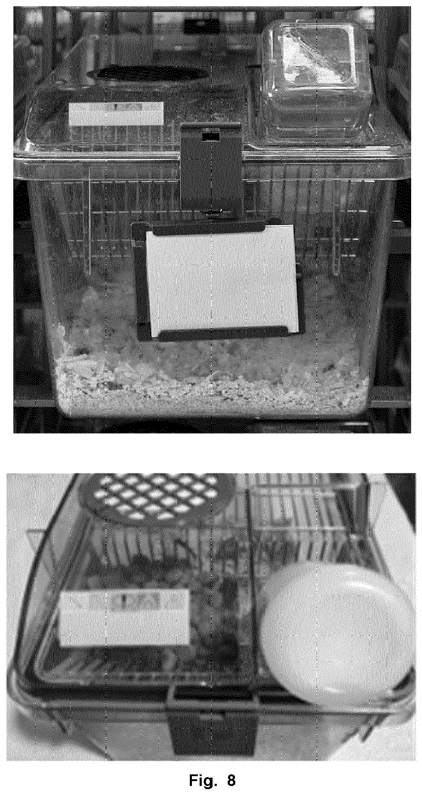

- Figure 8: These photographs show a cage with a test kit according to one embodiment of the present invention attached its interior surface, at a place where the animal cannot reach, in order to allow an easy observation from outside.

### DETAILED DESCRIPTION OF THE INVENTION

### Indicator paper strip and test kit

The present invention provides an indicator paper strip and a test kit for detecting and measuring ammonia gas in ambient air based on a paper impregnated with bromocresol purple. The test kit is intended to be commercialized under the tradename Ecotester ^{®}.

Bromocresol purple (CAS number 115-40-2) is a dye of the triphenylmethane family (triarylmethane dyes) with empirical formula C₂₁H₁₆Br₂O₅S and the following structure:

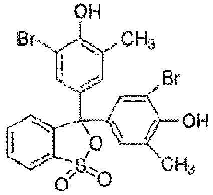

Bromocresol purple is used in medical laboratories to measure serum albumin concentrations. It is also suitable as a fluorescent stain in yeast cells: it helps in dead cell count for cells with plasma membrane damage since cells with proper cell membrane are not stained, while damaged cells are seen as blue-grey ghosts. Bromocresol purple is also a pH indicator which changes color from yellow (at low pH 5.2) to violet (above pH 6.8).

The present invention employs bromocresol purple as a colorimetric indicator for the detection and determination of ammonia in the air since it changes color from yellow to violet as the concentration of ammonia increases in the space where it is placed.

Bromocresol purple is a solid at room temperature but it may be conveniently applied as a solution to impregnate the paper strip. Preferably, a solution of bromocresol purple in alcohol (e.g. methyl or ethyl alcohol) is used to impregnate the paper strip. In a particular embodiment, said alcohol is methanol or ethanol, preferably ethanol. The alcohol may be used in different grades: for instance, 95-96% ethanol or absolute (99-100%) ethanol are suitable. In a particular embodiment, the alcoholic solution comprises between 0.01% and 2% (w/v) or between 0.05% and 1% (w/v) or between 0.05% and 0.5% (w/v) bromocresol purple. In a more particular embodiment, the concentration of the solution is about 0.05%, 0.1%, about 0.2%, about 0.3%, about 0.4% or about 0.5% (w/v), more particularly between 0.05% and 0.15% (w/v) (e.g. about 0.05%, 0.06%, 0.07%, 0.08%, 0.09%, 0.10%, 0.11%, 0.12%, 0.13%, 0.14%, 0.15% (w/v)). Even more particularly, the paper strip is impregnated with an about 0.1% (w/v) solution of bromocresol purple in ethyl alcohol (e.g. ethanol 95-96%).

In certain embodiments, a small amount of acid, preferably a weak acid having a pKa ≥ 3, may be added to the solution of bromocresol purple (as defined above) and said mixture is used for impregnating the paper strip. Examples of suitable weak acids include, but are not limited to, formic, lactic, acetic, propionic or hydrogen peroxide (e.g. H₂O₂ 110 vol). In a particular embodiment, an about 0.1% (w/v) solution of bromocresol purple in ethyl alcohol is mixed with one of said weak acids in a ratio 5-15 to 1 in volume, e.g. about 5 to 1, about 6 to 1, about 7 to 1, about 8 to 1, about 9 to 1, about 10 to 1, about 11 to 1, about 12 to 1, about 13 to 1, about 14 to 1 or about 15 to 1, more particularly in a ratio from about 9 to 1 to about 11 to 1.

The paper strip may be impregnated with bromocresol purple in different ways including for instance by dipping the paper strip in a solution of bromocresol purple or by applying a solution of bromocresol purple onto the paper strip by pulverization or with a roller or a brush. Preferably, the paper strip is impregnated with bromocresol purple by dipping.

In a particular embodiment, the paper strip comprises cotton, preferably at least 25%, 50% or 75% cotton. More preferably, the paper of the strip is 100% cotton. Cotton paper is superior in both strength and durability to wood pulp-based paper, which may contain high concentrations of acids.

After being impregnated with bromocresol purple, the paper strip turns yellow and is allowed to dry and, once dried, it may be used for detecting the presence or absence of ammonia in air. If the concentration of ammonia in the air surrounding the indicator paper strip increases, the strip changes its initial yellow color immediately.

Nevertheless, in a preferred embodiment, the indicator paper strip is used in association with a calibrated color chart comprising regions (e.g. 2, 3, 4, 5 or 6 regions, etc.) of different colors, where each colored region is indicative of a particular ammonia concentration (range). Both elements, indicator paper strip and calibrated color chart, may form part of a test kit.

An electronic device with electrochemical sensors or any other accurate system suitable for measuring ammonia may be used to calibrate the color chart.

In a particular embodiment, the color chart is qualitative where the change of color simply represents a measure of air quality. In this case, the color chart is divided in different regions which may include pictograms related to the ammonia concentration. Figures 5 and 6 show two examples of a qualitative test kit in which the color chart is calibrated in 5 different colored regions associated with descriptive pictograms informing of the level of ammonia: e.g. good or normal; acceptable; attention or alert: danger; unacceptable, intolerable. These 5 regions correspond to the following approximate colors: yellow; yellow-green; green; green-purple; purple.

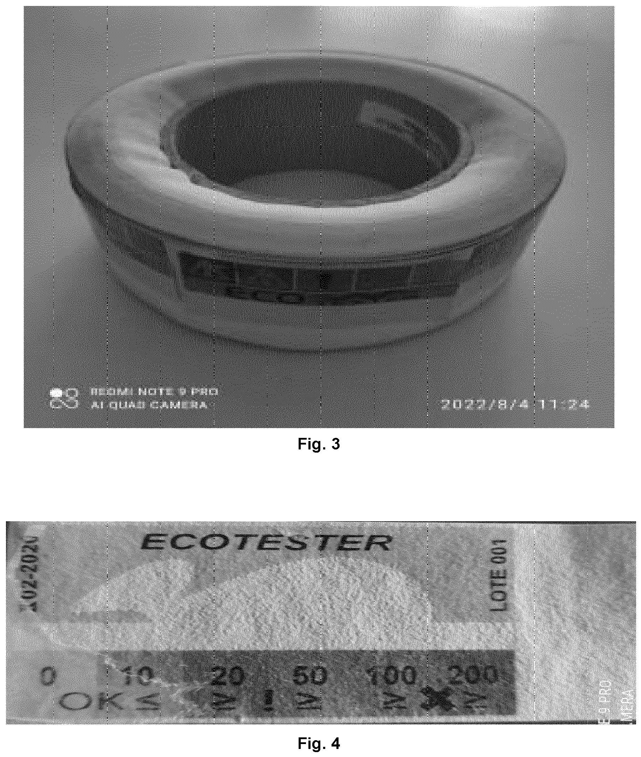

In another embodiment, the color chart is quantitative where the change of color represents a fairly approximate measure of the parts per million of ammonia. Figure 4 shows one example of a quantitative test kit in which the color chart is divided in 6 different colored regions related to the ammonia concentration: 0 ppm, ≤10 ppm, ≥20 ppm, ≥50 ppm, ≥100 ppm and ≥200 ppm. These 6 regions correspond to the following approximate colors: yellow; yellow-green; dark yellow-green; green; green-purple; purple.

According to a preferred embodiment, the color chart is printed on or otherwise included in a plastic sheet, preferably a transparent polypropylene vinyl sheet. The plastic sheet may be adhesive for attaching to the paper strip. The section of the plastic sheet corresponding to the color chart may be adhered to a waxed or siliconised paper for protection of the adhesive and when the kit is to be used said waxed or siliconised paper is removed so that that section may be used for attaching the kit to a point where ammonia is to be measured, e.g. to the interior surface of an animal cage or to the clothes (e.g. a lab coat) of a worker in risk of exposure to high concentration of ammonia.

The kits could be marketed in rolls, for instance of 100, 200 and 500 units, adhered to a surface of waxed or siliconised paper, from which it is very easy to remove the kit. The rolls can be placed in a sealed plastic bag to protect the kits until they are to be used. These rolls can be used directly, by manually peeling off the test kits, or they can be placed on roll holders.

The presentation and dimensions of the test kit may have various formats depending on the sector in which it is applied and the size of the space where ammonia is to be measured, from large spaces (e.g. halls, warehouses, etc.) to smaller and even closed spaces (e.g. cold rooms, animal cages, etc.). In a particular embodiment suitable for farm animal cages, the kit dimensions may for instance be 12 x 7 cm. In a particular embodiment suitable for small laboratory animal cages, the kit dimensions may for instance be 6 x 3 cm.

The cost of the test kit of the present invention is even ten times less than the traditional detection tubes. Further, unlike current ammonia test papers, the paper strip of the present invention must not be contacted with water, thus simplifying the reading of the ammonia concentration, and additionally it is functional for several measurements of ammonia.

### Methods and uses of the indicator paper strip and the test kit

The present invention also provides a method for detecting and measuring ammonia in ambient air, said method comprising:
a) providing the indicator paper strip according to the first inventive aspect of the invention and a calibrated color chart or providing the test kit according to the second inventive aspect of the invention;
b) putting the indicator paper strip or the kit in the place where ammonia is to be detected and measured; and
c) comparing the resulting color of the paper strip to the calibrated color chart to determine ammonia concentration.

The indicator paper strip and the test kit of the present invention may be used in any scenario where large amounts of ammonia are generated or are otherwise present such as in facilities for housing animals as well as in a number of other fields including different industries (fertilisers, textile, paper, plastic, explosives, etc.), climatization and air conditioning systems or the health care sector.

In lab animal facilities, the indicator paper strip or the kit of the present invention can be placed inside each cage occupied by animals in order to determine its dirty/clean state, making it possible to technically evaluate whether the animals can remain in the same cage for longer or whether it is necessary to change or clean the space, depending on the color acquired by the paper.

In this way it would only be necessary to change or clean those spaces based on the information provided by the indicator paper strip as it changes its color when reacting with ammonia, warning if the environment is correct or intolerable.

Advantageously, it is not necessary to manipulate or touch the paper strip nor the cage nor the animals since ammonia concentration may be determined by watching the color change of the paper strip from outside the animal cage.

Another objective of the invention is to reduce contamination by microorganisms during the handling of the animals when they are changed from cage to cage, which is generally done on a weekly basis, as there is no practical tool to discern which cages need to be changed and which can remain in operation for longer (unless the dirt, or smell, is very evident).

The kit of the invention provides this information which allows to significantly reduce the number of cages changed daily, helping to rationalise the changes and to organise this work with technically contrasted criteria.

In most modern facilities, in order to avoid the risk of contamination, animals are housed in sterile areas or clean rooms with a variety of barriers. There are barriers which use air as a constituent medium, namely by generating an overpressure in the area where the animals are housed and filtering the air through highly efficient filters, with a high number of air renewals being carried out in the areas where the animals are housed.

The so-called ventilated cages occupied by the animals are completely insulated from the outside, each cage being connected to sterile air ducts for both supply and exhaust air. Furthermore, everything in contact with the animals, including cages, bedding, food, drink, etc., is sterilised in an autoclave at high temperature (e.g. 121°C).

In order to handle the animals, the operators wear special sterile clothing, such as overalls, hats, footwear, masks, gloves, etc. (Personal Protection Equipments). The handling of the animal by the operator is carried out by moving the cage to a cabin where there is a sterile environment and in this cabin the cage is opened either for changing or for experimental handling.

The moment when most contamination occurs is precisely during handling, because if there is a contaminated animal, it can be transmitted to the rest of the animals handled by the operator.

The consequences of contamination are very serious in the experimental process as they can affect the results and/or extend the experimentation time or even having to start all over again.

It is so important to avoid contamination of animals that any exchange between researchers of a particular line of animals with other national or international centres should always be accompanied by the latest health check that has been carried out in the area from which they came (generally health checks are carried out every three months or six months at the most, and it is a professional guarantee that these checks are carried out frequently).

If these animals were to be moved to the production area, these animals would be crossed to extract their embryos, which are transferred to clean mothers that will give germ-free offspring.

It is also the object of the invention to achieve a considerable reduction in care, supervision and maintenance work, since the cages or spaces to be cleaned would be reduced on the basis of the information provided by the kit of the invention.

In sum, the following main objectives can be achieved with the use of the indicator paper strip or the test kit of the present invention, also referred to as Ecotester ^{®}, in lab animal facilities:
- Respect for animals by providing the animal with an "environmental enrichment" which translates into improved welfare for captive animals by early detecting signs of poor environmental quality in the air they breathe.

In this regard, a range of 25-30 ppm is usually taken as the maximum admissible amount of NH₃ in view of the safety and hygiene standards used in professional environments with presence of NH₃. However, ethically, the comparison is not fair because in the human environments the maximum exposure time is 8 hours for 5 working days and the user may even use protective equipment if deemed appropriate but this is not the case of animals in confinement: when NH₃ begins to be produced in the cage, their exposure is permanent 24 hours a day and the concentration is usually progressive until the cage is cleaned, In a preferred embodiment, the test kit of the invention incorporates in the calibrated color chart an ethical range for animals housed in cages, e.g. a range called Ecotester ethical range (REE, by its Spanish acronym) that approximately corresponds to 10-15 ppm of NH₃, so that change measures are taken as soon as possible, without reaching or exceeding 25 ppm in the cage. An example of this embodiment is depicted in Figure 6.
- Commitment with the researcher to offer an environment that is as neutral as possible so that his/her work is not affected and the experiment is always reproducible.
- Reduction of the "ecological footprint" by being able to select the environments to be cleaned by making a more responsible use of the resources employed and the waste generated (detergents, water, sterilisation steam, energy, bedding, use of large equipment such as autoclaves, washing machines, bedding dispensers, robots, etc.).

Although the description of the invention has primarily focused on its application for laboratory animals, it is actually intended for all places where ammonia may be present or where substances are present which may lead to the formation of NH₃. Examples of places where the present invention may be used are described below.

Like in animal laboratories, other facilities of animals (e.g. farms of livestock or poultry as well as pet animal facilities) may employ the indicator paper strip or the test kit of the present invention in order to determine, in view of the ammonia concentration measurements, whether the accumulation of urine and feces is excessive and therefore the animal housing must be cleaned.

Ammonia has a wide range of uses as a chemical product in industry: for the manufacture of fertilisers, as a solvent in the manufacture of textiles, leather, in the manufacture of pulp, paper, plastic and explosives.

Ammonia is also the most widely used industrial refrigerant, including for instance in food and beverage processing and preservation, such as in fruit and vegetable processing plants.

Ammonia is also present in the industrial air-conditioning and air-conditioning equipment sector, especially in large spaces such as airports, hospitals and hotels.

It is also used in household cleaning products and other products such as aromatic salts and as a stabiliser in the manufacture of rubber.

In the above scenarios, the indicator paper strip or the test kit of the present invention could be placed for instance in the areas where there is a risk of exposure to ammonia or alternatively each person (e.g. each worker) could carry the indicator paper strip or the test kit attached to the clothes.

Health-care facilities caring for patients that wear diapers, such as residential homes for the elderly, is another example of application for the present invention since prolonged skin contact with urine causes irritation and undesirable effects on the skin. An indicator paper strip or a test kit for this purpose could be placed on each patient, being thus possible to easily identify which persons should be changed of diapers.

Thus, the present invention also relates to the use of indicator paper strip or the kit of the invention for detecting and measuring ammonia in air in animal facilities (including lab animal facilities, farms of livestock, poultry and other animals as well as pet animal facilities), in factories of fertilisers, textile, paper, plastic or explosives, in food and beverage processing and preservation plants, in places with climatization and air conditioning systems or in health-care facilities caring for patients that wear diapers.

The following examples illustrate the invention and must not be considered as limiting the scope thereof.

### EXAMPLES

### Example 1

Several experiments were conducted in animal cages of a laboratory to study the performance of the indicator paper strip and the test kit according to the teachings of the present invention.

100% Cotton paper strips were dipped into different solutions of pH indicators:
- 0.1% (w/v) Bromocresol purple in ethanol
- 0.1% (w/v) Methyl red in ethanol
- 0.1% (w/v) Bromothymol blue in ethanol
- 0.02% (w/v) Phenol red commercial solution
- Bromocresol green/methyl red mixed indicator 4.8 for volumetric analysis
- Methylene blue/methyl red mixed indicator 4.4 for volumetric analysis
- 2% (w/v) Litmus

Also different indicator papers were tested:
- Universal indicator from pH 1 to pH 10 for volumetric analysis
- Litmus paper

The tests were carried out in environments at 21 °C to 23 °C and an average ambient humidity of 45% with 20 air renewals per hour in the cell and 50 air renewals inside the cage.

Among the paper strips tested, only those impregnated with bromocresol purple provided satisfactory results in the determination of ammonia concentration in air within the animal cages.

## Claims

1. Indicator paper strip impregnated with bromocresol purple for detecting and measuring ammonia in air without being moistened nor wet with water before use.

2. The strip according to claim 1, said strip being obtainable by impregnating a paper strip with a solution of bromocresol purple in alcohol, preferably methyl or ethyl alcohol.

3. The strip according to claim 2, wherein the concentration of the solution is between 0.05% and 1% bromocresol purple (w/v).

4. The strip according to any one of the preceding claims, wherein the paper comprises cotton.

5. Test kit for detecting and measuring ammonia in air, said kit comprising:
- the indicator paper strip according to any one of claims 1 to 4; and
- a calibrated color chart, where each color is indicative of a particular ammonia concentration.

6. The kit according to claim 5, wherein the calibrated color chart is included in a first section of an adhesive plastic sheet and the indicator paper strip is attached to a second section of said adhesive plastic sheet.

7. The kit according to claim 6, wherein said first section of the adhesive plastic sheet that includes the calibrated color chart is intended for attaching the kit to a point where ammonia is to be measured.

8. The kit according to any one of claims 5 to 7, wherein the calibrated color chart comprises a region corresponding to an ethical range for animals housed in cages indicating that the cage or the bedding material of the cage should be changed in order to avoid exposing the animals to dangerous concentrations of ammonia.

9. A method for detecting and measuring ammonia in air, said method comprising:
a) providing the indicator paper strip according any one of the preceding claims 1 to 4 and a calibrated color chart, or providing the test kit according to any one of claims 5 to 8;
b) putting the indicator paper strip or the kit in the place where ammonia is to be detected and measured; and
c) comparing the resulting color of the paper strip to the calibrated color chart to determine ammonia concentration.

10. Use of the indicator paper strip according to any one of claims 1 to 4 or the test kit according to any one of claims 5 to 8 for detecting and measuring ammonia in air, wherein said use does not comprise moistening or wetting the indicator paper strip with water.

11. The method according to claim 9 or the use according to claim 10, wherein the detection and measurement of ammonia in air is carried out by simply observation of the paper strip, without any manipulation of the paper strip.

12. The method according to claim 9 or the use according to claim 10, wherein the indicator paper strip or the test kit is used in animal facilities, in factories of fertilisers, textile, paper, plastic or explosives, in food and beverage processing and preservation plants, in places with climatization and air conditioning systems or in health-care facilities caring for patients that wear diapers.

13. The method according to claim 9 or the use according to claim 10, wherein the indicator paper strip or the test kit is used in animal facilities, preferably in laboratory animal facilities.

14. The method according to claim 9 or the use according to claim 10, wherein the indicator paper strip or the test kit is used in animal facilities, preferably in laboratory animal facilities, and the detection and measurement of ammonia in air allows determining whether the animal housing must be cleaned or not.

15. The method according to claim 9 or the use according to claim 10, wherein the indicator paper strip or the test kit is put inside one or more animal cages, and the detection and measurement of ammonia in air inside the cage is carried out by simply observation of the paper strip from outside the cage, without any manipulation of the paper strip nor the cage nor the animals.
